# EUROPEAN PATENT SPECIFICATION

(11) **EP 4 142 468 B1**
(45) Date of publication and mention of the grant of the patent: **01.07.2026**
(21) Application number: 21722400.5
(22) Date of filing: 26.04.2021
(51) Int. Cl.: A01F 15/07

(54) **ROUND BALER**
RUNDBALLENPRESSE
PRESSE À BALLES RONDES

(30) Priority: 27.04.2020 GB 202006124
(43) Date of publication of application: 08.03.2023
(60) Divisional application: 26158333.0
(73) Proprietor: Kuhn-Geldrop B.V., 5667 KP Geldrop (NL)
(72) Inventor: VAN DEN HURK, Nick Franciscus Johannes, 5384 ST Heesch (NL); VAN DEN BOOMEN, Benny Petrus Lambertus Martinus, 5595 GC Leenderstrijp (NL)
(74) Representative: Murgitroyd & Company
(86) International application number: PCT/EP2021/060808
(87) International publication number: WO 2021/219534

(56) References cited:
- EP-A1- 1 808 065
- EP-A1- 1 872 648
- EP-A1- 3 235 366
- EP-A1- 3 278 658
- EP-A2- 2 266 386
- GB-A- 2 475 849
- US-A1- 2018 310 482

## Description

The present invention relates to a round baler having a binding apparatus for applying a binding material to a cylindrical surface of a bale formed in the bale chamber of the baler.

A binding apparatus for a baler has a cycle of operation in which the leading end of the binding material is presented to the outer surface of the bale when the bale has reached a desired size or pressure, the binding material is wrapped at least once around the bale, and the supply of binding material from the apparatus to the bale is severed when the required binding of the bale has been completed.

It is known to provide devices for applying binding material to the outer surface of the bale, which enter the binding material, such as film or netting, into the bale forming chamber in which the compressed bale is formed. The binding material is used to bind the compressed bale to prevent expansion of the compressed material after the bale is ejected from the bale chamber.

An apparatus for applying a binding material to the outer surface of an agricultural bale is described in EP1776860A1. This apparatus has a cycle of operation in which the leading end of the binding material is presented to the outer surface of the bale when the bale has reached a required size, the binding material is wrapped at least once around the bale (typically 2-3 times for netting or 4-5 times for film), and the supply of binding material from the apparatus to the bale is severed when the required binding of the bale has been completed. The apparatus comprises a support for a supply reel of binding material, such as netting, a pull-off device that draws binding material from the supply reel, and a feed mouth that feeds and guides the binding material to the outer surface of the bale. The feed mouth is moveable between an operative feeding position near to the outer surface of the bale where the binding material is presented by the feed mouth to the outer surface of the bale, and a retracted position which the feed mouth takes up when binding has been completed so that the supply of binding material can be severed.

This type of feeding system is generally reliable when netting material is used as the binding material. Once the bale has been bound, it can be ejected from the bale chamber and in the case of silage it may be subsequently wrapped with a stretch film material.

Lately, the demand for silage bales that are bound with film instead of net binding material has increased, owing to the fact that when such bales are subsequently wrapped with stretch film for full coverage only one type of material is used for both binding and wrapping of the bale. Then, when the bale is to be used as silage, the film binding material and the film wrapping can be peeled off in one operation and can be more easily disposed of or recycled.

Simply replacing the net binding material with film binding material on this kind of feeding device will however lead to reliability problems. Especially, the correct feeding of the film binding material cannot be reliably ensured owing to the fact that the film is more slippery than the net binding material and cannot be gripped so easily between the bale and the press roller at the start of the binding operation. As a result, the leading end of the film, called the tongue, that extends from the feed mouth can slip over the rollers, and between the rollers and the bale, with the result that the film will not be pulled off the reel.

Further, as film is more flexible than net binding material, the tongue tends to hang straight down when it comes out of the feeding mouth, so that the roller below the entry point of the binding material cannot then grip the tongue and cannot transport the film binding material into the bale chamber.

Because the film binding material needs to be pre-stretched before it is entered into the bale chamber (to provide a tight binding on the bale), when the film is severed the length of the tongue hanging out of the feed mouth will decrease as the stretched film contracts again after severing. This decrease of the tongue length will vary depending on the type of the film, the stretch ratio, the working speed and the environmental conditions. This will result in a variation in the length of the tongue, which will exacerbate the problems described above.

In particular, if the tongue extending from the feed mouth is too short, it will not be possible for the bale and the press rollers to gain a sufficient grip on the tongue and the film binding material will not then be pulled from the reel. On the other hand, an excessively long tongue may be difficult to enter precisely into the bale chamber as the tongue will be bent by the roller and the roller will not be able to transport the tongue into the bale chamber.

The aforesaid problems, resulting from a variation in the length of the tongue that extends from the feed mouth, may also be present even when net binding material is used. Therefore, providing control over the length of the tongue that extends from the feed mouth, and optionally being able to adjust that length, is desirable both for film binding material and for net binding material.

Another known baler is disclosed in EP2266386.

It is an object of the present invention to provide a round baler that mitigates at least some of the aforementioned problems.

According to an aspect of the invention there is provided a round baler according to claim 1.

This allows the feed device to compensate for any retraction of the binding material as it is cut, and enables precise control over the length of the cut end of binding material that extends from the feed mouth, ensuring improved and more reliable feeding of the binding material into the bale chamber.

Optionally, the binding material is film binding material. Alternatively, net binding material may be used.

Optionally, the feed device includes a pull-off device that is configured to draw binding material from the supply. Optionally, the feed mouth that receives binding material from the pull-off device and is configured for movement relative to the pull-off device between the plurality of operational positions. Optionally, the pull-off device is driven to feed the binding material from the supply to the feed mouth while the feed mouth is in the retracted position and the first and second gripping elements are in the open configuration.

Optionally, the pull-off device is controlled to adjust the length of the cut end.

Optionally, the pull-off device is controlled by adjustable braking.

Optionally, the pull-off device is driven to draw binding material from the supply during movement of the feed mouth to the feed position. The pull-off device may be driven either actively or inactively, for example by inertia.

Optionally, during movement of the feed mouth to the feed position, the pull-off device is driven to draw a length of binding material that is less than the length required to accommodate movement of the feed mouth to the feed position. This feature can provide the feature that the cut end is partially drawn back into the feed mouth to the correct length, and so it stands up straight for better feeding.

Optionally, the supply device includes a pre-stretcher device located before the pull-off device, for pre-stretching the binding material.

Optionally, the first and second gripping elements comprise lips that are pressed together to grip the film binding material.

Optionally, the first and second gripping elements are configured to adopt the closed configuration when the feed mouth moves towards the feed position.

Optionally, the first and second gripping elements are configured to provide a substantially vertical free passageway between the first and second gripping elements in the open configuration.

According to another aspect of the invention there is provided a round baler according to claim 11.

Increasing the length of the cut end (or tongue) of binding material that extends from the feed mouth helps to ensure reliable feeding of the binding material into the feed opening at the start of the binding process.

These features significantly reduce the risk of tearing of the binding material during binding of the bale. This is particularly useful when a film binding material is used to bind the bale. However, it may also be useful when a net binding material is used to bind the bale. Therefore, in the following paragraphs the term "net binding material" may be substituted for "film binding material" where that term is used.

Optionally, the at least one driven feed element is controlled to adjust the length of the cut end.

Optionally, the at least one driven feed element is controlled by selective braking.

Optionally, the at least one driven feed element is driven during movement of the feed mouth to the feed position to feed binding material from the supply to the bale chamber.

Optionally, during movement of the feed mouth to the feed position, the at least one driven feed element is driven to feed a length of binding material that is less than the length required to accommodate movement of the feed mouth to the feed position.

Optionally the binding apparatus includes a bundling device that is configured to bundle the film binding material before the film binding material is cut, so that after the film binding material is cut, a cut end of bundled film binding material forms the tongue that extends from the feed mouth, wherein the tongue has a width less than the width of the unbundled film binding material.

Optionally, the baler includes a controller configured to control operation of the feed device automatically according to user controls and/or environmental conditions and/or material conditions and/or machine conditions.

Optionally, the controller is configured to control operation of the feed device by adjusting the drive or braking or feeding of the pull-off device during movement of the feed mouth to the feeding position, to control the length of the tongue or cut end of binding material that extends from the feed mouth, to ensure correct feeding into the bale chamber.

Optionally, the feed opening is located between adjacent press elements (e.g. press rollers or press belts).

Certain embodiments of the present invention will now be described, by way of example, with reference to the accompanying drawings, in which:
Figure 1 is an isometric view of a baler according to an embodiment of the invention, showing the front and left hand sides;
Figure 2 is an isometric view of part of the baler with its external covers removed, showing the front and right hand side;
Figure 3 is an isometric view of part of the baler with its external covers removed, showing the front and left hand side;
Figure 4 is a schematic side view showing components of a binding apparatus, comprising part of the baler, in a first configuration;
Figure 5 is a schematic side view showing components of the binding apparatus in a second configuration;
Figure 6 is a schematic side view showing components of the binding apparatus in a third configuration;
Figure 7 is a schematic side view showing components of the binding apparatus in a fourth configuration;
Figures 8-11 show components of the binding apparatus, illustrating various potential problems associated with the feeding of the binding material, and
Figure 12 is a schematic side view showing components of a binding apparatus when configured to bind a bale with net binding material.

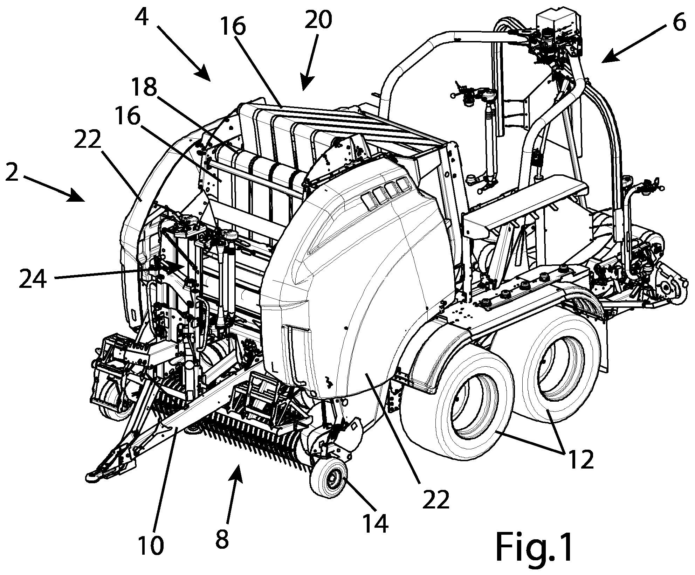

Figure 1 illustrates the main components of a round baler 2 according to an embodiment of the invention. In this embodiment the baler 2 is a combined baler/wrapper machine, which includes a front section 4 where a bale is formed from bale material, and a rear section 6 where the bale is wrapped with a stretch film wrapping material. It should be noted that the invention is also applicable to balers that do not include an integrated wrapper section. In that case, bales formed by the baler 2 may optionally be wrapped subsequently using a separate wrapping machine as is well known in the art. It should also be noted that the wrapper comprising the rear section 6 may take alternative forms, as are known in the art. The wrapper illustrated is of a conventional orbital type and will not be further described.

The baler 2, which in this embodiment is of the variable chamber type, includes a pick-up device 8 for picking up bale material, for example cut straw or grass, from the ground, a drawbar 10 for attaching the baler to a tractor, support wheels 12, 14 and a plurality of press elements comprising elongate belts 16 that are guided around a set of rollers 18, 60 and/or driven press rollers 56, 62, 64. The belts 16 together with a pair of end plates (not shown) create a cylindrical bale chamber 20 in which a round bale can be formed. The pick-up device 8 is configured to feed the bale material into the bale chamber 20 through a crop mouth 21. The sides of the baler 2 are covered by covers 22. The baler may be driven, for example, via the power take off (PTO) of the tractor. Again, these components are conventional and will not be further described.

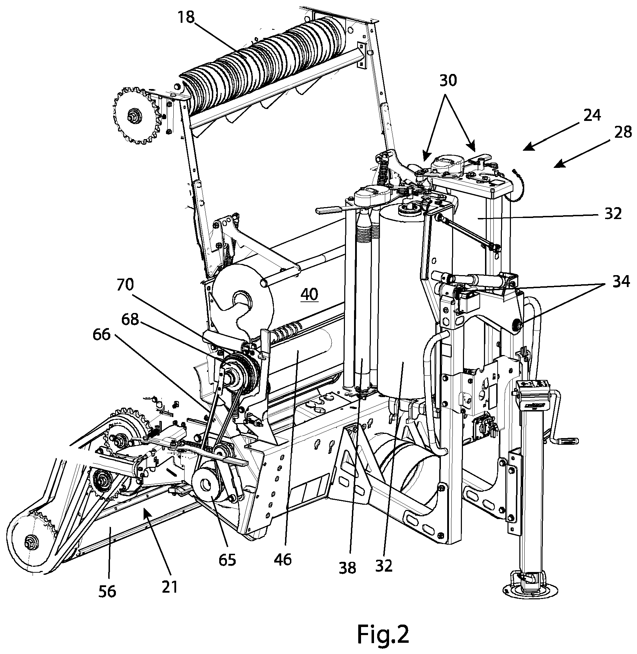

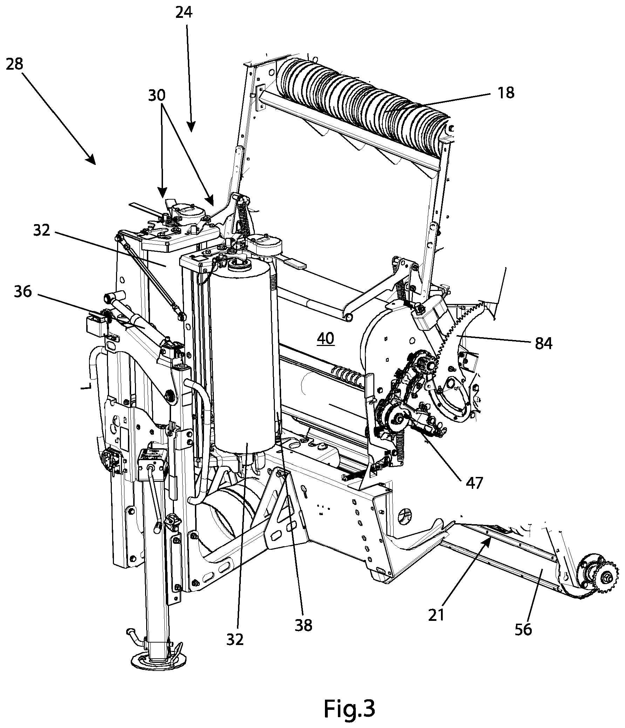

The baler also includes a binding apparatus 24 that is configured to apply a film binding material to a cylindrical surface of the bale formed in the bale chamber to bind the bale, and a cutter device 26 that is configured to cut the film binding material after the bale has been bound. Additional components of the baler are shown in figures 2 and 3, which show the internal mechanism of the baler with the covers 22 and belts 16 removed.

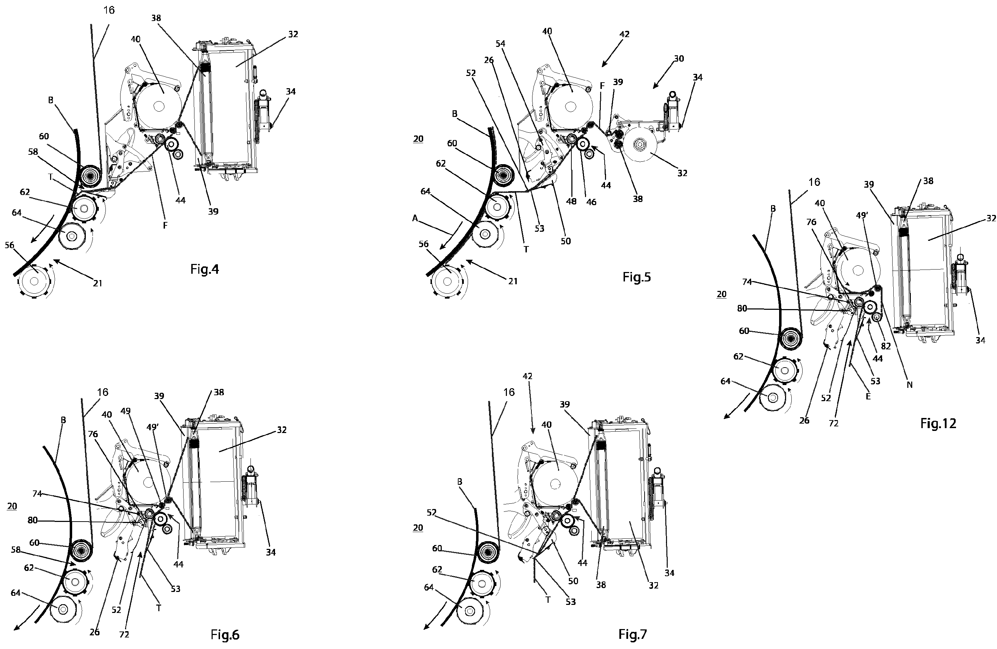

The binding apparatus 24 includes a supply device 28 for a supply 32 of film binding material. In this embodiment the supply 32 comprises two reels of film binding material, each reel being mounted on a separate support 30. Optionally, the supports 30 are each mounted on a pivot 34 which allows the support and the associated reel to pivot through 90 degrees from a vertical bundling position shown in figures 2, 3 and 4 to a horizontal binding position shown in figure 5 (compare figures 4 and 5). An actuator 36 is provided to drive rotation of the supports 30 and reels 32 between the vertical and horizontal positions. Alternatively, the supports 30 may be fixed in position so that they cannot be rotated to a bundling position.

The supply device 28 also includes a pre-stretcher device 38 for stretching the film binding material lengthwise as it is drawn from the reel 32. The pre-stretcher device 38 is of a conventional kind, comprising two rollers that are driven at different circumferential speeds to stretch the film binding material lengthwise as it passes around the two rollers.

A freely-rotating supply guide roller 39 located after the pre-stretcher device 38 also comprises part of the supply device 28.

In this embodiment, the baler also includes a reel 40 of net binding material, which can be used instead of the film binding material if, for operational reasons, the use of net binding material is preferred. The provision of a net binding system is optional.

Further features of the binding apparatus 24 can be seen more clearly in figures 4-8. Referring first to figure 5, the binding apparatus 24 comprises a feed device 42 that supplies film binding material F from the supply 30 to the bale chamber 20. The feed device 42 includes a pull-off device 44 comprising at least one driven roller 46, which can be braked by an adjustable brake 47. In this embodiment the pull-off device 44 also includes a freely rotating pinch roller 48 that cooperates with the driven roller 46 to grip the film F as it passes through the pinch between the rollers 46, 48. Alternatively, the pinch roller 48 may be driven or it may be omitted. The film binding material F is guided from the supply device 28 to the feed device 42 by first and second freely-rotating feed guide rollers 49, 49'.

The feed device 42 also includes a feed mouth 50 located after the pull-off device 44. In this embodiment the feed mouth 50 comprises a pair of lips 52, 53 that are pressed against one another and define a narrow slot through which the film binding material F passes. The lips 52, 53 are mounted on an arm 54 that can pivot about a pivot point (not shown). An actuator (not shown) is provided for driving pivoting movement of the pivot arm 54 and the feed mouth 50.

Operation of the binding apparatus is illustrated in figures 4-8. Referring first to figure 5, this shows the configuration of the binding apparatus 24 during binding of a round bale B in the bale chamber. The film binding material F is drawn from the supply (reel 32) and passes around the pre-stretcher device 38, which stretches the film lengthwise. As the film is elastic this ensures that when the film is applied to the cylindrical surface of the bale B it is in tension so that it binds the bale tightly.

The film binding material F then passes along a feed path from the pre-stretcher device 38 to the surface of the bale B via a feed opening 58 in the bale chamber 20, which is located between a pair of adjacent press elements comprising, in this case, an idler roller 60 that supports the belts 16 and a driven press roller 62. It should be noted that the feed opening 58 for the binding material is relatively narrow, having a width between the idler roller 60 and the press roller 62 of typically 25-50mm.

The feed opening 58 is displaced from the crop mouth 21 through which bale materials are introduced into the bale chamber 20, which is located between a second press roller 64 and a third press roller 56 below the feed opening 58. The crop mouth 21 is also much wider than the feed opening 58, typically having a width of 300-400mm. The feed path along which the film binding material F is fed from the pre-stretcher device 38 to the surface of the bale B is defined by various components of the feed device 42 including the pull-off device 44 and the feed mouth 50.

During binding of a bale, the bale B is rotated within the bale chamber 20 by the press elements, which may include belts and/or rollers. In the embodiment shown in figure 5 the bale B rotates in a clockwise direction indicated by arrow A and the press elements, which include both belts 16 and rollers (including the idler roller 60 and the driven press rollers 56, 62 and 64) rotate anti-clockwise. The film binding material F is fed into the bale chamber 20 though the feed opening 58, which is located between two adjacent press elements (idler roller 60 and press roller 62).

During binding of a bale B the film binding material F is drawn from the reel 32 primarily by rotation of the bale B within the bale chamber 20. The pull-off device 44 can also be driven during binding of the bale, for example from a drive pulley 65, via a drive belt 66 (see figure 2). The drive belt 66 passes around a driven pulley 68, which is connected to the driven roller 46 of the pull-off device 44 via a magnetic clutch 70. The magnetic clutch 70 includes a freewheel (not shown), which allows the driven roller 46 to rotate slower, but not faster, than the pulley 68 in the feeding direction. Therefore, the active drive to the driven roller 46 limits the maximum speed of the driven roller. The pull-off device 44 can be braked by the adjustable brake 47 after the binding material has been severed, to limit or prevent further driving of the binding material by inertia.

During binding of the bale with film binding material, the magnetic clutch 70 is engaged and the pull-off device 44 is driven to draw film binding material at a speed that is less than the circumferential speed of the bale B in the bale chamber 20. Typically, the pull-off device 44 may be driven at approximately 90% of the speed of the bale B. Because the drive speed of the pull-off device 44 is less than the speed at which the binding material is drawn by the bale, the binding material will be stretched between the pull-off device and the bale, ensuring a tight binding. This stretching of the binding material is in addition to any pre-stretching that may have been applied by the pre-stretcher device 38. If net is used to bind the bale, the net binding material is normally drawn from the supply entirely by rotation of the bale without activating the pull-off device. However, the pull-off device may optionally be braked (or driven) so that it runs at approximately 90% of the circumferential speed of the bale B, so as to stretch the net binding material.

If the film starts to tear during binding, the actively-driven pull-off device 44 will continue to rotate, to reduce the risk that the film binding material F will tear across its full width. The pull-off device 44 is driven actively at this time by engaging the clutch 70.

During binding the feed mouth 50 is located in a binding position, approximately midway between the pull-off device 44 and the feed opening 58, where it serves to guide the film binding material F from the pull-off device to the feed opening 58.

It will be noted that during binding of the bale B the reel 32 is in the horizontal binding position and the axis of the reel 32 is substantially parallel to the axes of the feed guide rollers 49, 49', the axis of the pull-off device 44, the axes of the rollers 60-64 and longitudinal axis the cylindrical bale B. Therefore, there is no twisting of the plane of the film binding material F as it passes from the reel 32 to the surface of the bale B. This ensures that the film binding material F is spread to its full width as it is applied to the bale. Also, it should be noted that in this embodiment two strips of film binding material F are applied side by side to the cylindrical surface of the bale B to cover the width of the bale B.

Once binding of the bale has been completed, the feed mouth 50 is retracted and the film binding material F is cut, so that the bound bale B can be ejected from the bale chamber 20. The configuration of the feed device 42 after the film binding material F has been cut is illustrated in figure 6.

It should be noted that in this embodiment the reels 32 of film binding material F have been rotated through 90 degrees from the horizontal binding position shown in figure 5 to the vertical bundling position, in which the axis of the supply guide roller 39 is perpendicular to the axes of the feed guide rollers 49, 49'. As a result, the film binding material F is gathered together or bundled to form a narrow strip of bundled film binding material as it passes over the feed guide rollers 49, 49'. The bundled strip of film binding material typically has a width of only 10-15mm, compared to a width of typically 620mm for the unbundled film binding material. Bundling of the film is optional and may be omitted if not required.

The bundled strip of film binding material then passes through the pull-off device 44 and into the feed mouth 50. When the feed mouth 50 is in the fully retracted position it adopts an open configuration as shown in figure 6, where the two lips 52, 53 are spaced apart to form a substantially vertical open passageway 72.

The feed mouth 50 is opened when it reaches the retracted position by the engagement of a roller 74 with a fixed part 76 of the frame of the baler. This causes the lower lip 53 to pivot open about a pivot 80. When the feed mouth 50 is in the open configuration, the pull-off device 44 can be driven to feed a length of film binding material F through the feed mouth 50 to increase the length of the cut end of the film binding material that extends from the front end of the feed mouth 50. If the film has been bundled this cut end of bundled film binding material forms a relatively stiff tongue T of film binding material that extends from the end of the feed mouth 50.

The length of the tongue T can be adjusted by controlling operation of the pull-off device 44, for example by adjustable braking and/or by operation of the magnetic clutch 70. Optionally, operation of the pull-off device 44 can be controlled automatically for example by an electronic control system or a computer, based on a number of factors including, for example, one or more of the following factors: a user setting for a long or short tongue, the PTO speed, the stretch setting of the pre-stretcher device 38, and environmental conditions such as temperature.

Figure 7 illustrates the feed device 42 in a holding configuration, which it adopts while a bale is being formed in the bale chamber 20. The feed mouth 50 has moved forward from the retracted position shown in figure 6 and the upper and lower lips 52, 53 have closed, gripping the tongue T of film binding material, which extends from the feed mouth. Because the feed mouth 50 is closed, the cut end of the film material is held securely and cannot blow around, for example in windy conditions. Also, because the feed mouth 50 is closed, dust and dirt from the baler cannot enter the feed mouth 50.

Figure 4 illustrates the feed device 42 in the feed position, in which the cut end of the film binding material (the tongue T) is fed by the feed mouth 50 into the bale chamber 20 through the feed opening 58. The feed mouth 50 has pivoted forwards towards the bale chamber 20 so that the tongue T is caught between the rotating bale B and the press roller 62, thus drawing the film binding material into the bale chamber 20. It will be noted that the feed mouth 50 extends into the narrow feed opening 58 between the press elements (rollers) 60, 62, so that the position of the tongue T is closely controlled.

The tongue T is optionally formed from bundled film binding material, which has a much greater stiffness that the unbundled film binding material. This makes it easier to control. The length of the tongue T is also carefully controlled by operation of the pull-off device 44 as described above, to ensure that it passes correctly through the feed opening 58 and is caught by the bale.

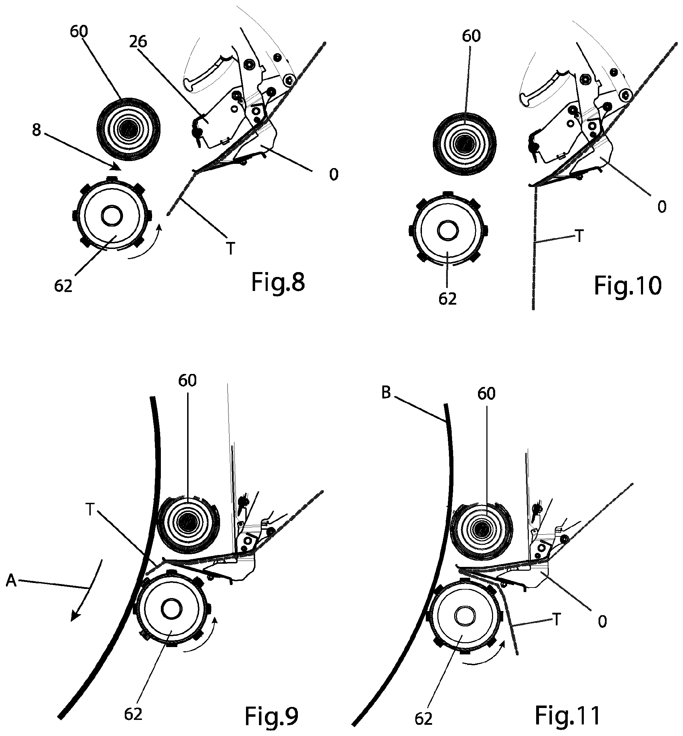

The possible consequences of different tongue lengths are illustrated in figures 8-11. In figure 8 the tongue length is correct and the tongue T extends forwards from the feed mouth 50 as it moves from the holding position to the feed position. Continued movement of the feed mouth 50 into the feed opening 58 will carry the tongue T through the gap between the rollers 60, 62 where it will be presented to the cylindrical surface of the bale. The anticlockwise rotation of the press roller 62 assists with feeding the tongue into the bale chamber 20 through the feed opening 59.

As the feed mouth 50 moves forwards from the holding position to the feed position, the pull-off device 44 is driven by the arc gear 84 to draw film binding material from the supply device 28. However, the pull-off device 44 is configured to draw a length of film binding material that is less than the length required to accommodate movement of the feed mouth 50 from the holding position to the feed position. As a result, the tongue T is partially drawn back into the feed mouth 50, which causes it to stand up in a more erect position. This allows it to be fed more accurately through the feed opening 58. The length of the tongue T is however sufficient to allow it to be caught between the rotating bale B and the press roller 62, so that the film binding material is drawn around the cylindrical surface of the bale B as it rotates.

Figure 9 illustrates a situation in which the length of the tongue T is incorrectly controlled, with the result that the tongue is too short. In this case, the tongue T is not caught between the bale B and the press roller 62, even though the feed mouth 50 has moved fully into the feed opening 58. The result is that the film binding material is not drawn around the cylindrical surface of the bale and the bale is not bound.

Figures 10 and 11 illustrate a situation in which the tongue T is too long. As a result of its increased weight, the tongue T hangs downwards from the feed mouth 50 as it moves forwards toward the feed opening 58 (figure 10). The end of the tongue T is not then inserted correctly through the feed opening 58 when the feed mouth 50 reaches the feed position (figure 11), but instead extends outward beyond the roller 62. Again, the result is that the film binding material is not drawn around the cylindrical surface of the bale B and the bale is not bound.

Operation of the feed device will now be described in more detail.

Figure 4 illustrates the configuration of the feed device 42 during feeding of the film binding material F. At this stage, the bale B has been completely formed in the bale chamber 20 and the feed mouth 50 has been moved to the feed position within the feed opening 58. The tongue T of film binding material is presented to the bale and is caught between the cylindrical surface of the rotating bale B and the press roller 62. Film binding material is thus drawn into the bale chamber 20. In this embodiment the reel 32 of film binding material is still in the vertical bundling position so that the film binding material is bundled to form a bundled tongue. In the case of film binding material, the pull-off device 44 is activated to draw film binding material from the reel 32, preferably for the full feeding time. This is not needed with net binding material: the net will drive the pull-off device 44, the speed of the pull-off device being limited by the freewheel.

Once the tongue T of film binding material has been caught by the bale B, binding of the bale can commence as illustrated in figure 5. The feed mouth 50 is partially retracted from the feed opening 58 to the binding position and in this embodiment the reel 32 of film binding material is rotated to the horizontal binding position so that the film binding material F is not bundled as it is drawn off the reel. The film binding material F is stretched by the pre-stretching device 38, to increase the length of the film binding material, for example by a factor of 1.3 to 1.8, or 1.4 to 1.6, or typically about 1.5. The pull-off device 44 is activated to draw film from the supply, but it is driven at a speed that is less that the circumferential speed of the bale in the bale chamber, so that the film is drawn into the bale chamber 20 primarily by rotation of the bale B. However, in the event that the film binding material starts to tear, the pull-off device 44 will continue to feed the film towards the bale chamber, to ensure that the tear does not spread across the entire width of the film.

The film binding material F passes through the feed mouth 50 and is drawn over the edges of the upper lip 52, which spreads the film so that the two strips of film cover the full width of the bale. Binding continues until an adequate thickness of film binding material has been applied to the cylindrical surface of the bale B. Typically, this may require three to five layers of film binding material.

Once binding of the bale has been completed, the reel 32 of film binding material F is optionally rotated back to the vertical bundling position shown in figure 6, so that the film binding material is gathered together into a narrow bundled strip. The cutter device 26 is then activated to cut the film between the feed mouth 50 and the feed opening 58, and the brake 47 is applied to halt rotation of the pull-off device 44. The feed mouth 50 is then retracted fully, causing the feed mouth to open. The bound bale can then be ejected from the bale chamber 20.

As the film binding material F has been stretched by the pre-stretcher device 38, it is under tension. Therefore, when the film binding material is cut, the tongue T contracts into the feed mouth 50 towards the pull-off device 44. After cutting, the pull-off device 44 is actuated to feed an additional length of film binding material towards the feed mouth 50, to increase the length of the tongue T that extends from the end of the feed mouth 50. As the feed mouth 50 is open, the film binding material falls freely through the passageway 72.

Once the correct length of the tongue T has been fed through the feed mouth 50, the pull-off device 44 is deactivated, for example by disengaging the magnetic clutch 70.

Optionally, the feed mouth 50 is then moved forward from the fully retracted position to the holding position shown in figure 7. As it moves to this position, the feed mouth 50 closes, gripping the tongue T of film material between the lips 52,53. The feed mouth 50 remains in the holding position until the next bale has been formed in the bale chamber 20.

Upon completion of the bale, the feed mouth 50 moves to the feed position shown in figure 4 to repeat the binding process. During movement of the feed mouth 50 from the holding position shown in figure 7 to the feeding position shown in figure 4, the pull-off device 44 is driven by an arc gear 84 to draw a length of film binding material that is less than the length required to accommodate movement of the feed mouth 50 from the holding position to the feed position, so that the tongue T is drawn partially back into the feed mouth 50. This causes the tongue T to adopt an erect position in which it can be inserted more easily into the feed opening 58.

As mentioned above, in this embodiment, the baler also includes a reel 40 of net binding material N, which can optionally be used instead of the film binding material if the use of net binding material is preferred. The configuration of the binding apparatus 24 when set up for net binding is illustrated in Figure 12, which shows the feed mouth 50 in the fully retracted position.

Net binding material N is drawn off from the reel 40 and passes around the second feed guide roller 49' and an idler roller 82. It is then engaged by the pull-off device 44 and fed to the feed mouth 50, which is located after the pull-off device 44.

When the feed mouth 50 is in the fully retracted position as shown in Figure 12 it adopts an open configuration where the two lips 52, 53 are spaced apart to provide a substantially vertical open passageway 72. While the feed mouth 50 is open the pull-off device 44 can be driven to feed a length of net binding material N through the feed mouth 50 to increase the length of the cut end E of net binding material that extends from the end of the feed mouth 50. As the feed mouth 50 is open, the cut end E of net binding material falls freely through the passageway 72. Once the correct length of net binding material has been fed through the feed mouth 50, the pull-off device 44 is deactivated and/or braked.

The length of the cut end E can be adjusted by controlling operation of the pull-off device 44, for example by adjustable operation of the brake 47 or by operation of the magnetic clutch 70. Optionally, operation of the pull-off device 44 can be controlled automatically for example by an electronic control system or a computer, based on a number of factors including, for example, a user setting for a long or short tongue, and/or the PTO speed.

The feed mouth 50 is then moved forward from the fully retracted position to the holding position, which is similar to the holding position shown in figure 7. As it moves to the holding position, the feed mouth 50 closes, gripping the cut end E of net binding material between the lips 52, 53. The feed mouth 50 remains in the holding position until the next bale has been formed in the bale chamber 20.

Upon completion of the bale, the feed mouth 50 moves to the feed position, which is similar to the feed position shown in figure 4, to start the binding process. During movement of the feed mouth 50 to the feeding position, the pull-off device may optionally be driven by the arc gear 84 to draw a length of net binding material N from the reel 40.

During movement of the feed mouth to the feed position, the cut end E of net binding material is drawn partially back into the feed mouth 50, causing the cut end E to adopt a more erect position in which it can be inserted more easily into the feed opening 58.

After the cut end E has been fed correctly into the bale chamber 20, the feed mouth 50 may be retracted to a binding position, which is similar to the binding position shown in Figure 5, where it remains until binding of the bale has been completed. The feed mouth 50 then moves back to the fully retracted position shown in Figure 12 and the net binding material N is cut, allowing the bound bale to be released from the bale chamber 20. The binding process then repeats as necessary.

## Claims

1. A round baler (2) comprising a bale chamber (20) having a crop mouth (21) for introducing bale material into the bale chamber (20) and a plurality of pressing elements (16, 18, 56, 60, 62, 64) configured to compress bale material in the bale chamber to form a round bale, a binding apparatus (24) configured to apply a binding material (F;N) to a cylindrical surface of a bale formed in the bale chamber (20) to bind the bale, and a cutter device (26) configured to cut the binding material (F;N) after the bale has been bound, wherein the binding apparatus (24) includes a supply device (28) comprising a support (30) for supporting a supply (32;40) of binding material and a feed device (42) that is configured to feed binding material (F;N) from the supply (32;40) to the bale chamber (20), wherein the feed device (42) includes a feed mouth (50) that receives binding material (F;N) from the supply (32;40) and is configured for movement between a plurality of operational positions, said plurality of operational positions including (i) a feed position adjacent a feed opening (58) of the bale chamber, which the feed mouth (50) adopts when feeding binding material (F;N) into the bale chamber (20), and (ii) a retracted position spaced from the feed opening (58), which the feed mouth (50) adopts during cutting of the binding material (F;N) after the bale has been bound, the cutter device (26) being configured to cut the binding material (F;N) between the feed opening (58) and the feed mouth (50) when the feed mouth (50) is in the retracted position, leaving a cut end (T;E) of binding material that extends from the feed mouth (50); the feed mouth (50) includes first and second gripping elements (52,53) that are configured to grip opposite sides of the binding material (F;N) and are adjustable between a closed configuration in which they grip the binding material (F;N) and an open configuration in which they do not grip the binding material (F;N), and **characterised in that** the feed device (42) is configured to feed binding material (F;N) from the supply (32;40) to the feed mouth (50) while the feed mouth is in the retracted position and the first and second gripping elements (52,53) are in the open configuration to increase the length of the cut end (T;E) of binding material that extends from the feed mouth (50).

2. A round baler according to claim 1, wherein the feed device (42) includes a pull-off device (44) that is configured to draw binding material (F;N) from the supply (32;40), wherein the feed mouth (50) receives binding material (F;N) from the pull-off device (44), and wherein the pull-off device (44) is drivable to feed the binding material (F;N) from the supply (32;40) to the feed mouth (50) while the feed mouth (50) is in the retracted position and the first and second gripping elements (52,53) are in the open configuration.

3. A round baler according to claim 2, wherein the pull-off device (44) is controllable to adjust the length of the cut end (T;E).

4. A round baler according to claim 2 or claim 3, wherein the pull-off device (44) is controllable by adjustable braking (47).

5. A round baler according to any one of claims 2 to 4, wherein the pull-off device (44) is drivable to draw binding material (F;N) from the supply (32;40) during movement of the feed mouth (50) to the feed position; and wherein during movement of the feed mouth (50) to the feed position, the pull-off device (44) is drivable to draw a length of binding material (F;N) that is less than the length required to accommodate movement of the feed mouth (50) to the feed position.

6. A round baler according to any one of the preceding claims, wherein the supply device (28) includes a pre-stretcher device (38) located before the pull-off device (44), for pre-stretching the film binding material (F).

7. A round baler according to any one of the preceding claims, wherein the first and second gripping elements (52,53) comprise lips (52,53) that are pressable together to grip the film binding material (F;N).

8. A round baler according to claim 7, wherein the first and second gripping elements (52,53) are configured to adopt the closed configuration when the feed mouth (50) moves towards the feed position.

9. A round baler according to claim 7 or claim 8, wherein the first and second gripping elements (52,53) are configured to provide a substantially vertical free passageway (72) between the first and second gripping elements (52,53) in the open configuration.

10. A round baler according to any one of the preceding claims, wherein the binding material (F;N) is film binding material (F).

11. A round baler (2) comprising a bale chamber (20) having a crop mouth (21) for introducing bale material into the bale chamber (20) and a plurality of pressing elements (16, 18, 56, 60, 62, 64) configured to compress bale material in the bale chamber (20) to form a round bale, a binding apparatus (24) configured to apply a film binding material (F) to a cylindrical surface of a bale formed in the bale chamber (20) to bind the bale, and a cutter device (26) configured to cut the binding material (F) after the bale has been bound, wherein the binding apparatus (24) includes a support (30) for supporting a supply (32;40) of binding material and a feed device (42) configured to feed binding material from the supply (32;40) to the bale chamber (20), wherein the feed device (42) includes a pull-off device (44) that is configured to draw film binding material (F) from the supply (32;40) and a feed mouth (50) that receives film binding material (F) from the pull-off device (44), the pull-off device (44) including at least one driven feed element (46), which is configured to feed the film binding material (F) from the supply (32;40) to the feed mouth (50); the feed mouth (50) is configured for movement between a plurality of operational positions, said plurality of operational positions including (i) a feed position adjacent a feed opening (58) of the bale chamber (20), which the feed mouth (50) adopts when feeding film binding material (F) into the bale chamber (20), and (ii) a retracted position spaced from the feed opening (58), which the feed mouth (50) adopts during cutting of the binding material (F) after the bale has been bound, the cutter device (26) being configured to cut the film binding material (F) between the feed opening (58) and the feed mouth (50) when the feed mouth (50) is in the retracted position; **characterised in that** the movement of the feed mouth (50) between the plurality of operational positions is relative to the pull-off device (44), the pull-off device is configured to be drivable to draw the film binding material (F) at a speed that is less than the circumferential speed of the bale in the bale chamber during binding of the bale, and the at least one driven feed element (46) is drivable to increase the length of a cut end (T) of binding material that extends from the feed mouth (50) after the binding material is cut.

12. A round baler according to claim 11, wherein the at least one drivable feed element (46) is controlled to adjust the length of the cut end (T).

13. A round baler according to claim 11 or 12, wherein the at least one drivable feed element (46) is controllable by selective braking (47).

14. A round baler according to any one of claims 11 to 13, wherein the at least one drivable feed element (46) is drivable during movement of the feed mouth (50) to the feed position to feed film binding material (F) from the supply (32;40) to the bale chamber (20); and wherein during movement of the feed mouth (50) to the feed position, the at least one drivable feed element (46) is driven to feed a length of binding material that is less than the length required to accommodate movement of the feed mouth (50) to the feed position.

15. A round baler according to any one of claims 11 to 14, wherein the binding apparatus (24) includes a bundling device that is configured to bundle the film binding material (F) before the film binding material (F) is cut, so that after the film binding material (F) is cut, a cut end (T) of bundled film binding material forms the tongue (T) that extends from the feed mouth (50), wherein the tongue (T) has a width less than the width of the unbundled film binding material.

16. A round baler according to any one of preceding claims, wherein the baler (2) includes a controller configured to control operation of the feed device automatically according to user controls and/or environmental conditions and/or material conditions and/or machine conditions.

17. A round baler according to claim 16, wherein the controller is configured to control operation of the feed device (42) by adjusting the drive or braking or feeding of the pull-off device (44) during movement of the feed mouth (50) to the feeding position.

18. A round baler according to any one of preceding claims, wherein the feed opening (58) is located between adjacent press elements (60,62).

## Patentansprüche

1. Eine Rundballenpresse (2), beinhaltend eine Ballenkammer (20) mit einer Erntegutmündung (21) zum Einführen von Ballenmaterial in die Ballenkammer (20) und einer Vielzahl von Presselementen (16, 18, 56, 60, 62, 64), die dazu konfiguriert sind, Ballenmaterial in der Ballenkammer zu komprimieren, um einen Rundballen zu bilden, einen Bindeapparat (24), der dazu konfiguriert ist, ein Bindematerial (F; N) auf eine zylindrische Oberfläche eines in der Ballenkammer (20) gebildeten Ballens aufzubringen, um den Ballen zu binden, und eine Schneidvorrichtung (26), die dazu konfiguriert ist, das Bindematerial (F; N) zu schneiden, nachdem der Ballen gebunden wurde, wobei der Bindeapparat (24) eine Zuführvorrichtung (28), die einen Träger (30) zum Tragen eines Vorrats (32; 40) von Bindematerial beinhaltet, und eine Einspeisevorrichtung (42), die dazu konfiguriert ist, Bindematerial (F; N) von dem Vorrat (32; 40) in die Ballenkammer (20) einzuspeisen, umfasst, wobei die Einspeisevorrichtung (42) eine Einspeisemündung (50) umfasst, die Bindematerial (F; N) von dem Vorrat (32; 40) empfängt und zur Bewegung zwischen einer Vielzahl von Betriebspositionen konfiguriert ist, wobei die Vielzahl von Betriebspositionen Folgendes umfasst: (i) eine Einspeiseposition, die an eine Einspeiseöffnung (58) der Ballenkammer angrenzt und die die Einspeisemündung (50) einnimmt, wenn Bindematerial (F; N) in die Ballenkammer (20) eingespeist wird, und (ii) eine zurückgezogene Position, die von der Einspeiseöffnung (58) beabstandet ist und die die Einspeisemündung (50) während des Schneidens des Bindematerials (F; N) einnimmt, nachdem der Ballen gebunden wurde, wobei die Schneidvorrichtung (26) dazu konfiguriert ist, das Bindematerial (F; N) zwischen der Einspeiseöffnung (58) und der Einspeisemündung (50) zu schneiden, wenn sich die Einspeisemündung (50) in der zurückgezogenen Position befindet, wobei ein Schnittende (T; E) von Bindematerial verbleibt, das sich von der Einspeisemündung (50) erstreckt; wobei die Einspeisemündung (50) ein erstes und ein zweites Greifelement (52, 53) umfasst, die dazu konfiguriert sind, gegenüberliegende Seiten des Bindematerials (F; N) zu greifen, und zwischen einer geschlossenen Konfiguration, in der sie das Bindematerial (F; N) greifen, und einer offenen Konfiguration, in der sie das Bindematerial (F; N) nicht greifen, einstellbar sind, und **dadurch gekennzeichnet, dass** die Einspeisevorrichtung (42) dazu konfiguriert ist, Bindematerial (F; N) von dem Vorrat (32; 40) in die Einspeisemündung (50) einzuspeisen, während sich die Einspeisemündung in der zurückgezogenen Position befindet und sich das erste und das zweite Greifelement (52, 53) in der offenen Konfiguration befinden, um die Länge des Schnittendes (T; E) von Bindematerial, das sich von der Einspeisemündung (50) erstreckt, zu vergrößern.

2. Rundballenpresse gemäß Anspruch 1, wobei die Einspeisevorrichtung (42) eine Abziehvorrichtung (44) umfasst, die dazu konfiguriert ist, Bindematerial (F; N) von dem Vorrat (32; 40) zu ziehen, wobei die Einspeisemündung (50) Bindematerial (F; N) von der Abziehvorrichtung (44) empfängt und wobei die Abziehvorrichtung (44) antreibbar ist, um das Bindematerial (F; N) von dem Vorrat (32; 40) in die Einspeisemündung (50) einzuspeisen, während sich die Einspeisemündung (50) in der zurückgezogenen Position befindet und sich das erste und das zweite Greifelement (52, 53) in der offenen Konfiguration befinden.

3. Rundballenpresse gemäß Anspruch 2, wobei die Abziehvorrichtung (44) steuerbar ist, um die Länge des Schnittendes (T; E) einzustellen.

4. Rundballenpresse gemäß Anspruch 2 oder Anspruch 3, wobei die Abziehvorrichtung (44) durch einstellbares Bremsen (47) steuerbar ist.

5. Rundballenpresse gemäß einem der Ansprüche 2 bis 4, wobei die Abziehvorrichtung (44) antreibbar ist, um Bindematerial (F; N) während der Bewegung der Einspeisemündung (50) in die Einspeiseposition von dem Vorrat (32; 40) zu ziehen; und wobei die Abziehvorrichtung (44) während der Bewegung der Einspeisemündung (50) in die Einspeiseposition antreibbar ist, um eine Länge von Bindematerial (F; N) zu ziehen, die geringer ist als die Länge, die erforderlich ist, um die Bewegung der Einspeisemündung (50) in die Einspeiseposition auszugleichen.

6. Rundballenpresse gemäß einem der vorhergehenden Ansprüche, wobei die Zuführvorrichtung (28) eine vor der Abziehvorrichtung (44) befindliche Vorstreckervorrichtung (38) zum Vorstrecken des Folienbindematerials (F) umfasst.

7. Rundballenpresse gemäß einem der vorhergehenden Ansprüche, wobei das erste und das zweite Greifelement (52, 53) Lippen (52, 53) beinhalten, die zusammenpressbar sind, um das Folienbindematerial (F; N) zu greifen.

8. Rundballenpresse gemäß Anspruch 7, wobei das erste und das zweite Greifelement dazu (52, 53) konfiguriert sind, die geschlossene Konfiguration einzunehmen, wenn sich die Einspeisemündung (50) in Richtung der Einspeiseposition bewegt.

9. Rundballenpresse gemäß Anspruch 7 oder Anspruch 8, wobei das erste und das zweite Greifelement (52, 53) dazu konfiguriert sind, in der offenen Konfiguration einen im Wesentlichen vertikalen freien Durchgang (72) zwischen dem ersten und dem zweiten Greifelement (52, 53) bereitzustellen.

10. Rundballenpresse gemäß einem der vorhergehenden Ansprüche, wobei das Bindematerial (F; N) Folienbindematerial (F) ist.

11. Eine Rundballenpresse (2), beinhaltend eine Ballenkammer (20) mit einer Erntegutmündung (21) zum Einführen von Ballenmaterial in die Ballenkammer (20) und einer Vielzahl von Presselementen (16, 18, 56, 60, 62, 64), die dazu konfiguriert sind, Ballenmaterial in der Ballenkammer (20) zu komprimieren, um einen Rundballen zu bilden, einen Bindeapparat (24), der dazu konfiguriert ist, ein Folienbindematerial (F) auf eine zylindrische Oberfläche eines in der Ballenkammer (20) gebildeten Ballens aufzubringen, um den Ballen zu binden, und eine Schneidvorrichtung (26), die dazu konfiguriert ist, das Bindematerial (F) zu schneiden, nachdem der Ballen gebunden wurde, wobei der Bindeapparat (24) einen Träger (30) zum Tragen eines Vorrats (32; 40) von Bindematerial und eine Einspeisevorrichtung (42), die dazu konfiguriert ist, Bindematerial von dem Vorrat (32; 40) in die Ballenkammer (20) einzuspeisen, umfasst, wobei die Einspeisevorrichtung (42) eine Abziehvorrichtung (44), die dazu konfiguriert ist, Folienbindematerial (F) von dem Vorrat (32; 40) zu ziehen, und eine Einspeisemündung (50), die Folienbindematerial (F) von der Abziehvorrichtung (44) empfängt, umfasst, wobei die Abziehvorrichtung (44) mindestens ein angetriebenes Einspeiseelement (46) umfasst, das dazu konfiguriert ist, das Folienbindematerial (F) von dem Vorrat (32; 40) in die Einspeisemündung (50) einzuspeisen; wobei die Einspeisemündung (50) zur Bewegung zwischen einer Vielzahl von Betriebspositionen konfiguriert ist, wobei die Vielzahl von Betriebspositionen Folgendes umfasst: (i) eine Einspeiseposition, die an eine Einspeiseöffnung (58) der Ballenkammer (20) angrenzt und die die Einspeisemündung (50) einnimmt, wenn Folienbindematerial (F) in die Ballenkammer (20) eingespeist wird, und (ii) eine zurückgezogene Position, die von der Einspeiseöffnung (58) beabstandet ist und die die Einspeisemündung (50) während des Schneidens des Bindematerials (F) einnimmt, nachdem der Ballen gebunden wurde, wobei die Schneidvorrichtung (26) dazu konfiguriert ist, das Folienbindematerial (F) zwischen der Einspeiseöffnung (58) und der Einspeisemündung (50) zu schneiden, wenn sich die Einspeisemündung (50) in der zurückgezogenen Position befindet; **dadurch gekennzeichnet, dass** die Bewegung der Einspeisemündung (50) zwischen der Vielzahl von Betriebspositionen relativ zu der Abziehvorrichtung (44) erfolgt, die Abziehvorrichtung dazu konfiguriert ist, antreibbar zu sein, um das Folienbindematerial (F) mit einer Geschwindigkeit zu ziehen, die geringer ist als die Umfangsgeschwindigkeit des Ballens in der Ballenkammer während des Bindens des Ballens, und das mindestens eine angetriebene Einspeiseelement (46) antreibbar ist, um die Länge eines Schnittendes (T) von Bindematerial, das sich von der Einspeisemündung (50) erstreckt, nachdem das Bindematerial geschnitten wurde, zu vergrößern.

12. Rundballenpresse gemäß Anspruch 11, wobei das mindestens eine antreibbare Einspeiseelement (46) gesteuert wird, um die Länge des Schnittendes (T) einzustellen.

13. Rundballenpresse gemäß Anspruch 11 oder 12, wobei das mindestens eine antreibbare Einspeiseelement (46) durch selektives Bremsen (47) steuerbar ist.

14. Rundballenpresse gemäß einem der Ansprüche 11 bis 13, wobei das mindestens eine antreibbare Einspeiseelement (46) während der Bewegung der Einspeisemündung (50) in die Einspeiseposition antreibbar ist, um Folienbindematerial (F) von dem Vorrat (32; 40) in die Ballenkammer (20) einzuspeisen; und wobei das mindestens eine antreibbare Einspeiseelement (46) während der Bewegung der Einspeisemündung (50) in die Einspeiseposition angetrieben wird, um eine Länge von Bindematerial einzuspeisen, die geringer ist als die Länge, die erforderlich ist, um die Bewegung der Einspeisemündung (50) in die Einspeiseposition auszugleichen.

15. Rundballenpresse gemäß einem der Ansprüche 11 bis 14, wobei der Bindeapparat (24) eine Bündelungsvorrichtung umfasst, die dazu konfiguriert ist, das Folienbindematerial (F) zu bündeln, bevor das Folienbindematerial (F) geschnitten wird, sodass nach dem Schneiden des Folienbindematerials (F) ein geschnittenes Ende (T) von gebündeltem Folienbindematerial die Zunge (T) bildet, die sich von der Einspeisemündung (50) erstreckt, wobei die Zunge (T) eine Breite aufweist, die geringer ist als die Breite des ungebündelten Folienbindematerials.

16. Rundballenpresse gemäß einem der vorhergehenden Ansprüche, wobei die Ballenpresse (2) eine Steuereinrichtung umfasst, die dazu konfiguriert ist, den Betrieb der Einspeisevorrichtung gemäß Benutzersteuerungen und/oder Umgebungsbedingungen und/oder Materialbedingungen und/oder Maschinenbedingungen automatisch zu steuern.

17. Rundballenpresse gemäß Anspruch 16, wobei die Steuereinrichtung dazu konfiguriert ist, den Betrieb der Einspeisevorrichtung (42) mittels des Einstellens des Antriebs oder Bremsens oder Einspeisens der Abziehvorrichtung (44) während der Bewegung der Einspeisemündung (50) in die Einspeiseposition zu steuern.

18. Rundballenpresse gemäß einem der vorhergehenden Ansprüche, wobei sich die Einspeiseöffnung (58) zwischen benachbarten Presselementen (60, 62) befindet.

## Revendications

1. Une presse à balles rondes (2) comprenant une chambre à balles (20) ayant une bouche pour cultures (21) destinée à l'introduction de matériau à mettre en balles dans la chambre à balles (20) et une pluralité d'éléments de pression (16, 18, 56, 60, 62, 64) configurés pour comprimer un matériau à mettre en balles dans la chambre à balles pour former une balle ronde, un appareil de liage (24) configuré pour appliquer un matériau de liage (F ; N) sur une surface cylindrique d'une balle formée dans la chambre à balles (20) pour lier la balle, et un dispositif de coupe (26) configuré pour couper le matériau de liage (F ; N) après que la balle a été liée, où l'appareil de liage (24) inclut un dispositif d'approvisionnement (28) comprenant un support (30) pour supporter un système d'approvisionnement (32 ; 40) de matériau de liage et un dispositif d'alimentation (42) qui est configuré pour alimenter en matériau de liage (F ; N) provenant du système d'approvisionnement (32 ; 40) la chambre à balles (20), où le dispositif d'alimentation (42) inclut une bouche d'alimentation (50) qui reçoit un matériau de liage (F ; N) provenant du système d'approvisionnement (32 ; 40) et est configurée pour se mouvoir entre une pluralité de positions opérationnelles, ladite pluralité de positions opérationnelles incluant (i) une position d'alimentation adjacente à une ouverture d'alimentation (58) de la chambre à balles, que la bouche d'alimentation (50) adopte lors de l'alimentation en matériau de liage (F ; N) de la chambre à balles (20), et (ii) une position rétractée espacée de l'ouverture d'alimentation (58), que la bouche d'alimentation (50) adopte pendant la coupe du matériau de liage (F ; N) après que la balle a été liée, le dispositif de coupe (26) étant configuré pour couper le matériau de liage (F ; N) entre l'ouverture d'alimentation (58) et la bouche d'alimentation (50) lorsque la bouche d'alimentation (50) est dans la position rétractée, laissant une extrémité coupée (T ; E) de matériau de liage qui s'étend depuis la bouche d'alimentation (50) ; la bouche d'alimentation (50) inclut des premier et deuxième éléments de préhension (52, 53) qui sont configurés pour saisir des côtés opposés du matériau de liage (F ; N) et sont ajustables entre une configuration fermée dans laquelle ils saisissent le matériau de liage (F ; N) et une configuration ouverte dans laquelle ils ne saisissent pas le matériau de liage (F ; N), et **caractérisée en ce que** le dispositif d'alimentation (42) est configuré pour alimenter en matériau de liage (F ; N) provenant du système d'approvisionnement (32 ; 40) la bouche d'alimentation (50) pendant que la bouche d'alimentation est dans la position rétractée et que les premier et deuxième éléments de préhension (52, 53) sont dans la configuration ouverte pour augmenter la longueur de l'extrémité coupée (T ; E) de matériau de liage qui s'étend depuis la bouche d'alimentation (50).

2. Une presse à balles rondes selon la revendication 1, où le dispositif d'alimentation (42) inclut un dispositif de tirage (44) qui est configuré pour extraire un matériau de liage (F ; N) provenant du système d'approvisionnement (32 ; 40), où la bouche d'alimentation (50) reçoit un matériau de liage (F ; N) provenant du dispositif de tirage (44), et où le dispositif de tirage (44) peut être entraîné pour alimenter en matériau de liage (F ; N) provenant du système d'approvisionnement (32 ; 40) la bouche d'alimentation (50) pendant que la bouche d'alimentation (50) est dans la position rétractée et que les premier et deuxième éléments de préhension (52, 53) sont dans la configuration ouverte.

3. Une presse à balles rondes selon la revendication 2, où le dispositif de tirage (44) peut être commandé pour ajuster la longueur de l'extrémité coupée (T ; E).

4. Une presse à balles rondes selon la revendication 2 ou la revendication 3, où le dispositif de tirage (44) peut être commandé par un freinage ajustable (47).

5. Une presse à balles rondes selon l'une quelconque des revendications 2 à 4, où le dispositif de tirage (44) peut être entraîné pour extraire un matériau de liage (F ; N) provenant du système d'approvisionnement (32 ; 40) pendant le mouvement de la bouche d'alimentation (50) vers la position d'alimentation ; et où pendant le mouvement de la bouche d'alimentation (50) vers la position d'alimentation, le dispositif de tirage (44) peut être entraîné pour extraire une longueur de matériau de liage (F ; N) qui est inférieure à la longueur requise pour permettre le mouvement de la bouche d'alimentation (50) vers la position d'alimentation.

6. Une presse à balles rondes selon l'une quelconque des revendications précédentes, où le dispositif d'approvisionnement (28) inclut un dispositif de pré-étirage (38) situé avant le dispositif de tirage (44), pour pré-étirer le matériau de liage en film (F).

7. Une presse à balles rondes selon l'une quelconque des revendications précédentes, où les premier et deuxième éléments de préhension (52, 53) comprennent des lèvres (52, 53) qui peuvent être pressées ensemble pour saisir le matériau de liage en film (F ; N).

8. Une presse à balles rondes selon la revendication 7, où les premier et deuxième éléments de préhension (52, 53) sont configurés pour adopter la configuration fermée lorsque la bouche d'alimentation (50) se meut en direction de la position d'alimentation.

9. Une presse à balles rondes selon la revendication 7 ou la revendication 8, où les premier et deuxième éléments de préhension (52, 53) sont configurés pour fournir un passage libre substantiellement vertical (72) entre les premier et deuxième éléments de préhension (52, 53) dans la configuration ouverte.

10. Une presse à balles rondes selon l'une quelconque des revendications précédentes, où le matériau de liage (F ; N) est un matériau de liage en film (F).

11. Une presse à balles rondes (2) comprenant une chambre à balles (20) ayant une bouche pour cultures (21) destinée à l'introduction de matériau à mettre en balles dans la chambre à balles (20) et une pluralité d'éléments de pression (16, 18, 56, 60, 62, 64) configurés pour comprimer un matériau à mettre en balles dans la chambre à balles (20) pour former une balle ronde, un appareil de liage (24) configuré pour appliquer un matériau de liage en film (F) sur une surface cylindrique d'une balle formée dans la chambre à balles (20) pour lier la balle, et un dispositif de coupe (26) configuré pour couper le matériau de liage (F) après que la balle a été liée, où l'appareil de liage (24) inclut un support (30) pour supporter un système d'approvisionnement (32 ; 40) de matériau de liage et un dispositif d'alimentation (42) configuré pour alimenter en matériau de liage provenant du système d'approvisionnement (32 ; 40) la chambre à balles (20), où le dispositif d'alimentation (42) inclut un dispositif de tirage (44) qui est configuré pour extraire un matériau de liage en film (F) provenant du système d'approvisionnement (32 ; 40) et une bouche d'alimentation (50) qui reçoit un matériau de liage en film (F) provenant du dispositif de tirage (44), le dispositif de tirage (44) incluant au moins un élément d'alimentation entraîné (46), qui est configuré pour alimenter en matériau de liage en film (F) provenant du système d'approvisionnement (32 ; 40) la bouche d'alimentation (50) ; la bouche d'alimentation (50) est configurée pour se mouvoir entre une pluralité de positions opérationnelles, ladite pluralité de positions opérationnelles incluant (i) une position d'alimentation adjacente à une ouverture d'alimentation (58) de la chambre à balles (20), que la bouche d'alimentation (50) adopte lors de l'alimentation en matériau de liage en film (F) de la chambre à balles (20), et (ii) une position rétractée espacée de l'ouverture d'alimentation (58), que la bouche d'alimentation (50) adopte pendant la coupe du matériau de liage (F) après que la balle a été liée, le dispositif de coupe (26) étant configuré pour couper le matériau de liage en film (F) entre l'ouverture d'alimentation (58) et la bouche d'alimentation (50) lorsque la bouche d'alimentation (50) est dans la position rétractée ; **caractérisée en ce que** le mouvement de la bouche d'alimentation (50) entre la pluralité de positions opérationnelles est relatif au dispositif de tirage (44), le dispositif de tirage est configuré pour pouvoir être entraîné pour extraire le matériau de liage en film (F) à une vitesse qui est inférieure à la vitesse circonférentielle de la balle dans la chambre à balles pendant le liage de la balle, et l'au moins un élément d'alimentation entraîné (46) peut être entraîné pour augmenter la longueur d'une extrémité coupée (T) de matériau de liage qui s'étend depuis la bouche d'alimentation (50) après que le matériau de liage a été coupé.

12. Une presse à balles rondes selon la revendication 11, où l'au moins un élément d'alimentation pouvant être entraîné (46) est commandé pour ajuster la longueur de l'extrémité coupée (T).

13. Une presse à balles rondes selon la revendication 11 ou la revendication 12, où l'au moins un élément d'alimentation pouvant être entraîné (46) peut être commandé par un freinage sélectif (47).

14. Une presse à balles rondes selon l'une quelconque des revendications 11 à 13, où l'au moins un élément d'alimentation pouvant être entraîné (46) peut être entraîné pendant le mouvement de la bouche d'alimentation (50) vers la position d'alimentation pour alimenter en matériau de liage en film (F) provenant du système d'approvisionnement (32 ; 40) la chambre à balles (20) ; et où pendant le mouvement de la bouche d'alimentation (50) vers la position d'alimentation, l'au moins un élément d'alimentation pouvant être entraîné (46) est entraîné pour alimenter une longueur de matériau de liage qui est inférieure à la longueur requise pour permettre le mouvement de la bouche d'alimentation (50) vers la position d'alimentation.

15. Une presse à balles rondes selon l'une quelconque des revendications 11 à 14, où l'appareil de liage (24) inclut un dispositif de bottelage qui est configuré pour botteler le matériau de liage en film (F) avant que le matériau de liage en film (F) ne soit coupé, de sorte qu'après que le matériau de liage en film (F) a été coupé, une extrémité coupée (T) du matériau de liage en film bottelé forme la languette (T) qui s'étend depuis la bouche d'alimentation (50), où la languette (T) a une largeur inférieure à la largeur du matériau de liage en film non bottelé.

16. Une presse à balles rondes selon l'une quelconque des revendications précédentes, où la presse à balles (2) inclut un organe de commande configuré pour commander le fonctionnement du dispositif d'alimentation automatiquement selon des commandes utilisateur et/ou des conditions environnementales et/ou des conditions de matériau et/ou des conditions de machine.

17. Une presse à balles rondes selon la revendication 16, où l'organe de commande est configuré pour commander le fonctionnement du dispositif d'alimentation (42) par l'ajustement de l'entraînement ou du freinage ou de l'alimentation du dispositif de tirage (44) pendant le mouvement de la bouche d'alimentation (50) vers la position d'alimentation.

18. Une presse à balles rondes selon l'une quelconque des revendications précédentes, où l'ouverture d'alimentation (58) est située entre des éléments de presse adjacents (60, 62).
